# EUROPEAN PATENT SPECIFICATION

(11) **EP 2 558 421 B1**
(45) Date of publication and mention of the grant of the patent: **25.01.2017**
(21) Application number: 09808990.7
(22) Date of filing: 04.12.2009
(51) Int. Cl.: C02F 3/28, C02F 103/32, C02F 103/28, C02F 103/06, C02F 1/66, C02F 103/34

(54) **AN ANAEROBIC WASTEWATER TREATMENT SYSTEM**
ANAEROBES ABWASSERBEHANDLUNGSSYSTEM
SYSTÈME DE TRAITEMENT ANAÉROBIE DES EAUX USÉES

(43) Date of publication of application: 20.02.2013
(73) Proprietor: Biotechnical Processes International Limited, Limerick (IE)
(72) Inventor: KELLY, Thomas Patrick, Kildimo County Limerick (IE); SZENDRY, Michael Ladislaus, Limerick (IE); GERVAIS, Gary William, Limerick (IE); MARTINS, Amadeu Crevatin Rocha, Limerick (IE)
(74) Representative: MacLachlan & Donaldson
(86) International application number: PCT/EP2009/066429
(87) International publication number: WO 2011/066866

(56) References cited:
- WO-A1-91/19682
- WO-A1-2008/066546
- DE-A1-102005 025 508
- US-A- 5 529 692
- ROMLI M ET AL: "EFFECT OF RECYCLE ON A TWO-PHASE HIGH-RATE ANAEROBIC WASTEWATER TREATMENT SYSTEM" WATER RESEARCH, ELSEVIER, AMSTERDAM, NL LNKD- DOI:10.1016/0043-1354(94)90285-2, vol. 28, no. 2, 1 February 1994 (1994-02-01), pages 475-482, XP000415306 ISSN: 0043-1354
- MASAHIRO TATARA ET AL: "High-rate thermophilic methane fermentation on short-chain fatty acids in a down-flow anaerobic packed-bed reactor" BIOPROCESS AND BIOSYSTEMS ENGINEERING, SPRINGER, BERLIN, DE LNKD- DOI:10.1007/S00449-004-0387-8, vol. 27, no. 2, 1 April 2005 (2005-04-01), pages 105-113, XP019347328 ISSN: 1615-7605

## Description

The present invention relates to an anaerobic treatment system and in particular to a system comprising an integrated two stage anaerobic digester system.

Biological wastewater treatment involves the use of large numbers of bacteria contained within a bioreactor to degrade organic matter contained within the wastewater thereby creating a clean water discharge. During the degradation or treatment process new bacteria proliferate thus increasing the number of bacteria present in the wastewater. In order to ensure that the biological process continues to operate at optimum efficiency levels excess bacteria are removed by using a settling process which forms a solid, known as 'sludge' which is subsequently removed. Use of anaerobic bacteria over aerobic bacteria in the treatment of wastewater is preferable by virtue of the fact that anaerobic bacteria produce about one tenth of a kilogram of sludge for every kilogram of organic matter consumed compared to one half of a kilogram of organic matter consumed in a typical aerobic system.

DE 10 2005 025508 A1 teaches a method of continuous-biotechnological sludge disintegration, for the disintegration of suspended solids in liquid sludge from unavoidable waste, remainders and raw materials, comprising pre-fermentation; splitting of the organic macro-molecules present in the liquid sludge; obtaining the liquid sludge as pre-fermentation broth into methane fermenting stage; transferring the split products present in the pre-fermentation broth; obtaining the liquid sludge as a foul fermentation broth; post-treating under aerobic condition and recycling as further less volume-occupying residue.

Anaerobic digestion is an old technology and available in a wide variety of geometries and modes of operation. The earliest form of anaerobic digestion treatment was in the form of a continuously stirred closed tank anaerobic reactor. The first commercial scale treatment plant was built in France in the late 19th century. In 1904, Imhoff invented the 'Imhoff Tank' a combined anaerobic digestion and sedimentation tank. During the course of the twentieth century, a number of improvements were incorporated into the design of anaerobic digestion systems to handle a variety of different wastewater streams.

Currently, there are a number of different types of anaerobic digestion processes known, for example, the contact process, the sludge blanket process, the fluidized bed process and the upflow fixed film process.

In the anaerobic digestion process there are four principle populations of bacteria or microbes that work synergistically in the destruction of the organic wastes found in the wastewater stream. It is understood that the term microbes refers to organisms of microscopic size such as various species of bacteria.

Focusing only on the carbon pathway, and simplifying greatly, the metabolic niches occupied by different classes of organisms in the bioreactor are (1) facultative microbes that hydrolyze organic polymers such as starches, fats and proteins and liberate simple monomers such as sugars, amino acids and fatty acids; (2) acidogenic organisms that consume the free monomers and excrete volatile organic acids and simple alcohols into the media; (3) acetogenic organisms that convert volatile acids and alcohols into acetic acid, carbon dioxide (CO₂) and hydrogen (H₂); and (4) methanogenic archaea bacteria that consume acetic acid and hydrogen (H₂) to produce methane gas and carbon dioxide (CO₂).

Simplifying even further, the facultative microbes and acidogenic organisms are typically referred to as acidogenic organisms which carry out the acidification stage of the anaerobic digestion process. The acidification stage consists of the breakdown of biological polymers into their component monomers such as amino acids, fatty acids and simple sugars, which are subsequently metabolized to produce organic acids. The acetogenic organisms and methanogenic archaea bacteria together comprise methanogenic organisms which carry out the methane formation stage of the anaerobic digestion process; this converts these organic acids to methane and carbon dioxide.

Typically in anaerobic digestion processes the acidogenic organisms are relatively fast growing and robust but the methanogens are extremely slowly growing and fastidious. Therefore, the production of methane is normally the rate limiting step in the anaerobic destruction of organic wastes in wastewater.

Furthermore in typical anaerobic digestion processes there is an additional population of anaerobic microbes that process inorganic and organic sulfur compounds found in the wastewater stream. During the anaerobic digestion process, most inorganic sulfates in the effluent streams are reduced to hydrogen sulfide. This approximates to about 95% of total sulfates in the wastewater. Additionally a significant fraction of organic sulfur present in the original waste stream is converted to hydrogen sulfide (H₂S). However this causes a problem for this type of system as hydrogen sulfide is toxic to all microbes, but especially toxic to methanogenic bacteria. Consequently wastewater streams containing sulfur present an especially difficult challenge in the design of an efficient anaerobic digestion treatment system.

In addition to having the correct environmental conditions in order for any biochemical reaction to proceed efficiently a sufficiently large number of the above indicated bio-organisms must be present. A problem associated with any biochemical wastewater treatment process which uses micro-organisms is how to keep a sufficient population of viable microbes inside the tank or bioreactor where the actual biochemical reactions occur. This problem is especially acute in the case of anaerobic digestion systems because the methanogenic population grows so slowly and they are very fastidious and susceptible to environmental upsets. A method by which a high and stable bacterial population can be achieved is to grow the microbes on a support matrix whereby the microbial population is attached to the support in the form of a biofilm, which comprises a bacterial population embedded in an extracellular matrix which is produced by the microbes themselves and which is made up of both organic and inorganic compounds.

US 4,311,593, US 4,599,167 Benjes et al, disclose a Process and Apparatus for the treatment of waste water. US 4,599,168 Benjes et al, also discloses an improvement to the apparatus for the treatment of waste water of US 4,599,167 having selective recycle control. The apparatus disclosed therein comprises a single stage fixed-film anaerobic digester wherein the effluent is transferred to the top of each bioreactor so that the flow operates in a downflow mode, thereby eliminating the problem of plugging as solids are flushed out continuously.

In order to improve and therefore maximise the performance of anaerobic wastewater treatment systems, a variety of systems incorporating two or more treatment stages have been published. In summary these systems are divided into four separate classes as follows;
(i) Two aerobic treatment stages, the first for maximum removal of organic matter and the second for enhanced nitrification and/or destruction of specific pollutants;
(ii) A traditional aerobic system with a secondary anaerobic treatment stage for sludge reduction to minimize sludge handling and disposal;
(iii) An anaerobic treatment stage followed by an aerobic polishing step for further reduction in organic matter prior to discharge; and
(iv) Two (or more) anaerobic treatment stages in series, designed to optimise the performance of the anaerobic digestion process itself.

The publication of M. Ros, G.D. Zupancic. (2004: Two-stage thermophilic anaerobic-aerobic digestion of waste-activated sludge environmental engineering science. 2004, 21(5): 617-626. Doi:10.1089/ees.2004.21.617), discloses a two stage digestive system for sludge destruction comprising an initial thermophilic anaerobic stage followed by a thermophilic aerobic polishing step. This system is a combination of the classes (ii) and (iii) described above. This may be considered typical of a plethora of two stage anaerobic and aerobic systems that have been developed for high strength wastewater treatment. Although the overall performance of this system is very high, as measured by reduction in Chemical Oxygen Demand (COD), it shares similar problems to those of all thermophilic anaerobic and aerobic digestion processes, such as the lack of robustness of the bacteria, long ramp up periods following shut-down, intolerance of the bacteria to process changes and shock loads, as well as the high operating costs inherent in aerobic systems.

WO 9720643, Vogt & Holbein, discloses a process comprising two anaerobic digestion stages with steam explosion of refractile cellulosics between the two stages. It is specifically designed for highly fibrous, high suspended solid wastewater streams as hydrolysis of cellulosics is extremely slow in anaerobic digestion systems. Lignin present in cellulose passes through a typical anaerobic digestion system with very little reduction in its concentration. This system was specifically designed for treating wastes with high concentrations of suspended solids.

US 5,630,942, Steiner discloses a four stage fixed film down flow system with each stage consisting of thermophilic anaerobic bacteria or microbes. The system is comprised of multiple anaerobic bioreactors in series with ordered plastic media to support both acidogenic and methanogenic biomass. The bioreactors also function as decanting devices for the solids/sludge created. The first two fixed film bioreactors are operated in an acidic pH environment. The channels of the media are slanted to enhance the decanting action. The effluent from the second bioreactor is transferred to a third fixed film anaerobic bioreactor of the same design and with the same plastic media packing. However the third bioreactor is operated in a neutral pH environment to encourage the growth of methanogenic bacteria. The effluent of the third bioreactor is subsequently transferred to a fourth bioreactor which operates under the same conditions as the third bioreactor. Each of the four bioreactors has a sludge wasting system to enable periodical removal of solids. There is internal recirculation within each of the four bioreactors to ensure homogenous mixing. This system attempts to operate each stage very close to its pH optimum, with a pH difference of two or more pH units between each stage. Although this gross pH separation serves to maximize acid hydrolysis and acidification in the first stage as well as acetogenesis and methanogenesis in the second stage, the cost in buffering agents such as caustic soda to maintain the pH separation is problematic and operation of the anaerobic digestion system is uneconomical in practice. Furthermore the angled flow channels which enhance the decanting effect reduce total biomass accumulation on the media; consequently the volume of gas produced is significantly reduced.

Although many two stage systems have been patented, they suffer from increased operating costs compared to single stage systems, increased consumption of caustic for pH control, and decreased tolerance for feed composition fluctuations. These systems are prone to acid runaway because the acid forming population in the first stage bioreactor is more rapidly growing and more robust than the methanogenic population in the second stage. In addition, although acetic acid is the main source of carbon for methanogenesis, the microbial population is very sensitive to acid pH and the metabolic activity of these organisms is almost completely inhibited below pH 6.5.

It is an object of the present invention to provide an improved anaerobic wastewater treatment system and to seek to alleviate the aforementioned problems.

According to the invention there is provided an apparatus for the treatment of fluid containing oxygen demanding organic material with microorganisms comprising;
a two stage downflow anaerobic digester comprising a predigester and at least one anaerobic bioreactor connected in series with the predigester, wherein each of the predigester and the at least one anaerobic bioreactor comprise a substantially fluid tight vessel,
the predigester having at least one predigester inlet and at least one predigester outlet whereby the inlet and the outlet are arranged so that the fluid enters the two stage anaerobic
digester at the at least one predigester inlet and flows in a downward direction through the predigester from the at least one predigester inlet to the at least one predigester outlet;
the anaerobic bioreactor having at least one anaerobic bioreactor inlet, at least one anaerobic bioreactor outlet and a plurality of high surface area porous media suitable for growth of microorganisms intermediate the inlet and the outlet thereupon filling at least a portion of the anaerobic bioreactor, whereby the inlet and outlet are arranged so that the fluid enters the anaerobic bioreactor at the at least one anaerobic bioreactor inlet and flows in a downward direction through the anaerobic bioreactor and thereby engages with the microorganisms on the media;
wherein at least one predigestor outlet is connected to at least one anaerobic bioreactor inlet; and
wherein each of the predigester and anaerobic bioreactor further comprise at least one recirculation device withdrawing fluid from a lower portion of each of the predigester and anaerobic bioreactor and returning the withdrawn fluid to an upper portion of each of the predigester and anaerobic bioreactor respectively;
wherein the downflow anaerobic digester further comprises at least one return circulation feed between at least one anaerobic bioreactor outlet and at least one predigester inlet; and
the fluid exits the two stage anaerobic digester at the at least one anaerobic bioreactor outlet, wherein the headspaces of the predigester and the downflow anaerobic bioreactor are linked by a conduit to ensure equal gas pressure between the headspaces of the predigester and the downflow anaerobic bioreactor, and
wherein the plurality of high surface area porous media are ordered plastic media which are stacked in the centre of the downflow anaerobic bioreactor such that, in use, they are submerged in the liquid bulk of the bioreactor with vertical channels, and wherein there are liquid void spaces of approximately 1 m depth both above and below the media stack.

An alternative apparatus, not forming part of the invention, for the treatment of fluid containing oxygen demanding organic material with microorganisms may comprise:
a two stage downflow anaerobic digester comprising a predigester and at least one anaerobic bioreactor connected in series with the predigester , wherein each of the predigester and the at least one anaerobic bioreactor comprise a substantially fluid tight vessel,
the predigester having at least one predigester inlet and at least one predigester outlet whereby the inlet and the outlet are arranged so that the fluid enters the two stage anaerobic digester at the at least one predigester inlet and flows in a downward direction through the predigester from the at least one predigester inlet to the at least one predigester outlet;
the predigester operating under anaerobic conditions in a pH range of between 6.0 and 7.0;
the anaerobic bioreactor having at least one anaerobic bioreactor inlet, at least one anaerobic bioreactor outlet and a plurality of high surface area porous media suitable for growth of microorganisms intermediate the inlet and the outlet thereupon filling at least a portion of the anaerobic bioreactor, whereby the inlet and outlet are arranged so that the fluid enters the anaerobic bioreactor at the at least one anaerobic bioreactor inlet and flows in a downward direction through the anaerobic bioreactor and thereby engages with the microorganisms on the media;
the anaerobic bioreactor operating under anaerobic conditions in a pH range of between 7.0 and 8.0;
wherein the pH difference between the predigester and the at least one anaerobic bioreactor is approximately 0.5 to 1 pH units;
wherein at least one predigester
outlet is connected to at least one anaerobic bioreactor inlet; and
wherein each of the predigester and anaerobic bioreactor further comprise at least one recirculation device withdrawing fluid from a lower portion of each of the predigester and anaerobic bioreactor and returning the withdrawn fluid to an upper portion of each of the predigester and anaerobic bioreactor respectively;
wherein the downflow anaerobic digester further comprises at least one return circulation feed between at least one anaerobic bioreactor outlet and at least one predigester inlet; and the fluid exits the two stage anaerobic digester at the at least one anaerobic bioreactor outlet.

According to the invention there is also provided a method for reducing the level of oxygen demanding material in a fluid stream using a two stage anaerobic digester comprising a predigester and an anaerobic bioreactor having a plurality of high surface area porous media suitable for growth of microorganisms, wherein the headspaces of the predigester and the downflow anaerobic bioreactor are linked by a conduit to ensure equal gas pressure between the headspaces of the predigester and the downflow anaerobic bioreactor and
wherein the plurality of high surface area porous media are ordered plastic media which are stacked in the centre of the downflow anaerobic bioreactor such that, in use, they are submerged in the liquid bulk of the bioreactor with vertical channels, and wherein there are liquid void spaces of approximately 1 m depth both above and below the media stack,
the steps of the method comprising the steps of;
(a) introducing an influent fluid stream to the two stage anaerobic digester to an inlet on the predigester;
(b) flowing said fluid downwardly through the predigester to an outlet on the predigester;
(c) flowing a portion of the fluid from the outlet of the predigester into an inlet on the anaerobic bioreactor, recirculating a further portion of the said fluid from a lower portion of the predigester to an upper portion of the predigester and withdrawing a further portion of the fluid as an effluent stream from the outlet on the predigester;
(d) flowing the fluid from the inlet on the anaerobic bioreactor downwardly through the anaerobic bioreactor to an outlet on the anaerobic bioreactor such that the fluid passes through the media and engages with the microorganisms so as to reduce the level of oxygen demanding material in the fluid relative to the level of oxygen demanding material in the influent fluid stream;
(e) recirculating a portion of the fluid from a lower portion of the anaerobic bioreactor to an upper portion of the anaerobic bioreactor;
(f) recirculating a further portion of the fluid from the lower portion of the anaerobic bioreactor to the upper portion of the predigester; and
(g) withdrawing the remaining fluid as an effluent stream from the outlet on the anaerobic bioreactor, preferably wherein nutrients can be added to the fluid intermediate the predigester and anaerobic digester stages,
   preferably wherein the nutrients comprise one or more selected from the macronutrients group comprising urea and/or ammonium phosphate and/or one or more selected from the micronutrients group comprising in the form of dissolved Zinc Chloride (ZnCl₂), Molybdenum Chloride (MoCl₂), Cobalt Chloride (CoCl₂), Manganese Chloride (MnCl₂), Potassium Chloride (KCl), Magnesium Chloride (MgCl₂) and others,
   preferably wherein a buffering agent can be added to the fluid intermediate the predigester and anaerobic digester

In the method for reducing the level of oxygen demanding material in a fluid stream using a two stage anaerobic digester comprising a predigester and an anaerobic bioreactor having a plurality of high surface area porous media suitable for growth of microorganisms, the predigester is preferably operated under anaerobic conditions in a pH range of between 6.0 and 7.0, the anaerobic bioreactor operating under anaerobic conditions in a pH range of between 7.0 and 8.0, wherein the pH difference between the predigester and the anaerobic bioreactor is approximately 0.5 to 1 pH units, the steps of the method comprising the steps of;
(a) introducing an influent fluid stream to the two stage anaerobic digester to an inlet on the predigester;
(b) flowing said fluid downwardly through the predigester to an outlet on the predigester;
(c) flowing a portion of the fluid from the outlet of the predigester into an inlet on the anaerobic bioreactor, recirculating a further portion of the said fluid from a lower portion of the predigester to an upper portion of the predigester and withdrawing a further portion of the fluid as an effluent stream from the outlet on the predigester;
(d) flowing the fluid from the inlet on the anaerobic bioreactor downwardly through the anaerobic bioreactor to an outlet on the anaerobic bioreactor such that the fluid passes through the media and engages with the microorganisms so as to reduce the level of oxygen demanding material in the fluid relative to the level of oxygen demanding material in the influent fluid stream;
(e) recirculating a portion of the fluid from a lower portion of the anaerobic bioreactor to an upper portion of the anaerobic bioreactor;
(f) recirculating a further portion of the fluid from the lower portion of the anaerobic bioreactor to the upper portion of the predigester; and
(g) withdrawing the remaining fluid as an effluent stream from the outlet (28) on the anaerobic bioreactor.

The two stage downflow anaerobic digester (DAB) of the invention provides a highly efficient method for treatment of fluid containing high concentrations of organic matter or soluble Chemical Oxygen Demand (COD) levels. It is understood that the term COD is used to describe the overall level of organic matter in fluid which is determined by measuring the amount of oxygen required to fully oxidize the organic matter in a sample of fluid. It is also understood that fluid containing high concentrations of organic matter or soluble Chemical Oxygen Demand (COD) levels is also referred to as wastewater.

It is also understood that the apparatus of the invention may be used to treat any wastewater having organic or any other contaminants having a chemical oxygen demand (COD) level which is suitable for being acted upon by bacteria or microbes to reduce the amount of or oxidize the organic contaminants. In particular the system and process of the invention are suitable for use in the treatment of alcohol distillery wastewaters (vinasse).

Preferably the system is limited to treating wastewater streams in which no more than 10% ± 2% of the total solids are in the form of suspended material and in which the bulk of the solids are ideally soluble solids. Examples of Industries which produce high strength, low suspended solids wastewater streams which are suitable for the two stage anaerobic digestion system of the invention are listed in the table below;

| **Industry** | **Examples** |
|---|---|
| | • Ice cream |
| Dairy | • milk processors |
| | • cheese whey plants |
| | • Fermentation plants |
| | • biopharmaceuticals |
| Pharmaceuticals | • Active ingredients manufacturers (bulk chemicals plants) |
| | • Vitamin and nutraceutical manufacturers |
| | • Antibiotics plants |
| | • Juice Plants |
| | • Canneries |
| Food Processors | • Meat Packers |
| | • Starch Mills |
| | • High fructose corn syrup |
| | • Baby Food Processors |
| | • Breweries |
| Alcoholic Beverages | • Wineries |
| | • Rum distillers |
| | • Other distilled liquors |
| Other Natural Products Industries | • Pulp and paper |
| | • Single Cell Protein plants |
| | • Organic solvent fermentations |
| | • Extraction plants (e.g. Decaffeinated coffee plant) |
| Other Waste Remediation | • Sludge reduction |
| | • leachates from landfills |

Preferably the two stage anaerobic digester comprises a continuously mixed predigester and at least one downflow anaerobic bioreactor. Ideally the fluid tight vessel for each of the predigester and downflow anaerobic bioreactor comprises a sealed steel tank.

In the preferred embodiment of the invention, the predigester is operated under anaerobic conditions at acidic pH levels in order to optimize the hydrolysis and acidification the organic matter in the wastewater. Ideally the predigester is operated under anaerobic conditions in a pH range of between 6.0 and 7.0 and more preferably at a pH level of approximately 6.5.

In the preferred embodiment of the invention the anaerobic bioreactor is operated under anaerobic conditions at neutral pH in order to maximize methane production. Ideally the anaerobic bioreactor is operated under anaerobic conditions in a pH range of between 7.0 and 8.0 and more preferably at a pH level of approximately 7.5.

Conveniently in the preferred embodiment of the invention the pH difference between the predigester and the anaerobic bioreactor is approximately 0.5 to 1 pH units.

The downflow anaerobic bioreactor contains high surface area porous media commonly known as plastic media arranged so that the flow of effluent through the tank operates in downflow mode. Ideally the liquid feed/effluent transferred to the downflow anaerobic bioreactor perculates through one or more submerged passive diffuser heads which are positioned in the head space of the downflow anaerobic bioreactor to ensure homogeneous flow through a packed bed of plastic media.

In the preferred embodiment the high surface area porous media or plastic media support growth of and maintain a large fixed population of anaerobic bacteria, primarily methanogenic and acetogenic populations, which then convert volatile organic acids produced in the predigester into biogas. Conveniently the bacteria primarily produce methane and carbon dioxide and a small quantity of hydrogen sulfide.

Ideally the fixed population of viable microbial biomass attached to the plastic media produces a film of bacteria, which is embedded in an extracellular matrix of both organic and inorganic compounds produced by the microbes themselves. The advantage of this is that the fixed film provides the downflow anaerobic bioreactor with its robustness and rapid restart capability. However in order to successfully convert waste organic matter into valuable biogas, the downflow bioreactor must still operate within the limits set by the strict environmental requirements of the resident microbial population.

Acidogenic organisms prefer an acid pH, while the methanogenic microbes prefer a slightly alkaline environment, all single stage anaerobic digestion systems must operate near neutral pH to permit the metabolic activity of the microbial populations to occur. Unfortunately, this compromise incurs a trade-off in efficiency, as none of the bacterial populations operates near its pH optimum. This is especially important for the methanogens, which basically show zero gas production below a pH level of approximately 6.5. They can even be killed if the pH falls very far into the acidic range. This is problematic given that the acidogenic organisms are continuously producing copious amounts of organic acids in the acidification stage.

Advantageously the two stage downflow anaerobic bioreactor separates the microbial process itself into two stages with each stage operating at a different pH range. It is preferable that the predigester comprises stage one or the first stage of the two stage process and that the anaerobic bioreactor comprises stage two or the second stage of the two stage process.

In the preferred embodiment of the invention the predigester supports growth of a completely mixed suspended culture of facultative bacterial organisms that carry out acidogenic functions. Ideally this is a completely mixed suspended culture bioreactor which operates in the acid range and so the population consists primarily (but not exclusively) of facultative organisms that carry out acidogenic functions.

Conveniently the effluent from the predigester feeds the second stage, which is comprised of one or more modified downflow anaerobic bioreactors. Stage two operates under neutral or mildly alkaline conditions to maximize methane production. The microbial population in the downflow anaerobic bioreactor's consists primarily (but not exclusively) of acetogenic and methanogenic obligate anaerobes. By operating the two stages under two different pH regimes, each microbial population finds itself in an environment much closer to its optimum and so all microbial processes are accelerated.

Advantageously in one embodiment of the invention, the two stage downflow anaerobic system is designed to optimize cost of operation rather than overall efficiency of microbial activity and so the downflow anaerobic bioreactor system is controlled to maintain a pH difference between stage one and stage two of approximately 0.5 to 1 pH units.

Preferably the effluent from the predigester which is used to feed the downflow anaerobic bioreactor is treated with a buffering agent, for example, caustic soda to ensure the effluent being fed to the downflow anaerobic digester is of neutral pH. A pH neutral environment provides optimal conditions for the production of methane. Conveniently in contrast the downflow anaerobic bioreactor operates at a pH level of approximately 7.5 to 8 to maximize methane generation rate.

Conveniently the biogas produced accumulates at the top of the downflow anaerobic bioreactor in what is known as the 'head space of the tank'. The biogas can also collect at the top of the predigester. The two gas phases are linked by a conduit to ensure equal gas pressure between the head spaces of the predigester and the downflow anaerobic bioreactor. This also ensures that the gas in each head space mixes and therefore enables the gas composition in each head space to have the same composition.

Preferably each of the predigester and downflow anaerobic bioreactor have continuous internal recirculation of the contents of each tank respectively to ensure complete mixing and optimal reduction of the organic compounds in the wastewater being treated by the system. Conveniently in the preferred embodiment of the invention the recirculation device in the predigester operates at a recirculation rate of between three and ten times the volumetric flow rate of the at least one predigester inlet and more preferably at approximately three times the volumetric flow rate of the at least one predigester inlet. Equally it is preferable for the anaerobic bioreactor to operate at a recirculation rate of between three and ten times the volumetric flow rate of the at least one anaerobic bioreactor inlet and more preferably at approximately three times the volumetric flow rate of the at least one anaerobic bioreactor inlet.

In the preferred embodiment of the invention, some of the effluent from the downflow anaerobic bioreactor is returned to the predigester. Ideally the recirculation rate of the downflow anaerobic bioreactor effluent stream back to predigester is within the range of zero to one-third of the feed flow rate.

The advantage of having a return circulation feed is that it reduces the demand for expensive chemicals normally required for controlling the performance of the system. An additional advantage of this is that the effluent from the downflow anaerobic bioreactor acts as a buffering agent on the effluent entering the predigester. Consequently the volume hence consumption of additional buffering agent required to adjust the pH of the solution is reduced significantly. Preferably both the predigester and the downflow anaerobic bioreactor operate at the same temperature. Optionally the two stage anaerobic digester is operational at temperatures suitable for either mesophilic or thermophilic bacteria. Ideally the optimum temperature for mesophilic bacteria is within the range of 38°C to 40°C +/- 2°C. Ideally the optimum temperature for thermophilic bacteria is 50°C to 55°C +/- 2°C. Ideally when the system is operated at thermophilic temperatures (53°C to 55°C+/- 2°C) the rate of destruction of organic solids in the wastewater is enhanced. This is turn reduces the size of the tank's required. However, the thermophilic operation reduces the shock load tolerance of the system and increases the ramp up time following system shut-down.

The at least one predigester outlet is connected to at least one anaerobic bioreactor inlet by a conduit. Conveniently the effluent from the predigester is transferred to the top of the downflow anaerobic bioreactor via the conduit between the at least one predigestor outlet and at least one anaerobic bioreactor inlet. Optionally nutrients can also be injected into the recirculation line and/or feed line of the predigester in order to optimize biogas production and COD reduction. The nutrients are preferably one or more selected from the group comprising macronutrients, primarily urea and/or ammonium phosphate, and/or micronutrients in the form of dissolved Zinc Chloride (ZnCl₂), Molybdenum Chloride (MoCl₂), Cobalt Chloride (CoCl₂), Manganese Chloride (MnCl₂), Potassium Chloride (KCl), Magnesium Chloride (MgCl₂) and others. The amount of macronutrients and micronutrients to be added is based upon the chemical composition of the wastewater feed stream and the performance of the bioreactor in terms of COD reduction and biogas production rate.

Preferably the level of liquid in the predigester may be controlled in order to alter the ratio of the predigester to downflow anaerobic bioreactor working volumes. The volume ratio may thus be optimized to improve system performance. Furthermore, the predigester may be designed with excess capacity so that future additional treatment capacity may be created by constructing additional downflow anaerobic bioreactor modules as needed. The working volume of the predigester may then be increased by changing the level set point as needed to service more downflow anaerobic bioreactor modules as they are brought on-line as treatment requirements increase over time.

Optionally in one embodiment of the invention the bottom of the predigester comprises a clarifier to remove excess suspended solids. A separate outlet line may be provided for periodically wasting solids from the bottom of the predigester. Solids settling may be promoted by periodically shutting down the internal circulation within the predigester to permit settling of dense solids several hours prior to sludge wasting. Advantageously removal of suspended solids at this juncture will increase the lifetime of the plastic media.

An alternative embodiment of the system incorporates a continuous flow gravity decanter in-line between the predigester and the downflow anaerobic bioreactor. The supernatant from the decanter is the feed to the downflow anaerobic bioreactor, while the bottom-effluent line from the decanter, enriched for suspended solids such as calcium precipitates, is disposed of in an alternative manner to protect the downflow anaerobic bioreactor from calcium precipitates and thus increase the life of the ordered media.

Any organic nitrogen which is liberated during the hydrolysis of organic compounds and which is not converted into bacterial proteins is typically reduced to ammonia in the reducing environment of the anaerobic bioreactor. Many free amino acids produced during the hydrolysis of proteins are stripped of their nitrogen and carboxyl groups in a deamination reaction, and the amine is released as ammonia. During this process additional reduced hydrogen is produced. These reactions are inhibited at high hydrogen concentrations, so the presence of the acetogens and methanogens to consume H₂ as it forms is essential to ensure complete destruction of proteins. Advantageously the ammonia and carbonates in solution produced as a consequence of these reactions provides a significant contribution to the buffering of the downflow anaerobic bioreactor.

One advantage of the present invention is that the microbial population maintains viability and is robust enough to withstand extended shutdown periods and has rapid restart capability. In addition the microbial population recovers rapidly from shocks to population such as a change to pH environment caused by process upsets. This stability is a primary attraction of the downflow anaerobic bioreactor system compared to suspended growth systems on the market such as the upflow anaerobic sludge blanket which are used as the industrial standard for treating municipal wastewaters.

Advantageously the biogas produced as a by-product of the anaerobic digestion process is collected and is available for further use if so desired.

An advantage of the system of the invention is that the efficiency of the downflow anaerobic bioreactor is improved by adding a predigester and operating the anaerobic predigester at a lower pH (which is the optimum condition for acidification) while holding constant or increasing the pH of the downflow anaerobic bioreactor (optimum conditions for acetogenesis and methanogenesis). Further advantages of the system of the invention include a reduction in the need for buffering agents to control pH by incorporating recirculation of the downflow anaerobic bioreactor effluent (rich in carbonates) back to the predigester to help buffer the acidification reaction and inhibit acid runaway while minimizing the consumption of expensive buffering agents.

The invention will hereinafter be more particularly described with reference to the accompanying drawings which illustrate by way of example only, three embodiments of the invention.

### In the drawings:

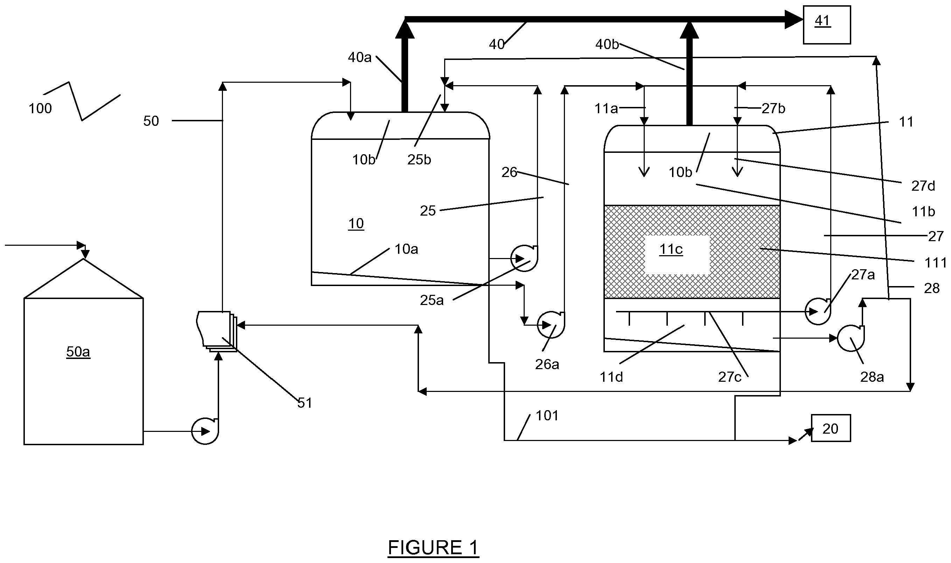

Figure 1 is a schematic flow diagram of the two stage anaerobic digestion system of the invention.

Referring to Figure 1 there is shown a schematic flow diagram of the two stage anaerobic digestion system 100 comprising the following;

### The predigester 10:

The predigester 10 is a completely mixed stirred tank reactor. It has approximately one third of the working volume of the downflow anaerobic bioreactor 11. Alternatively, a single predigester 10 can operate with three second stage downflow anaerobic bioreactors 11 operating in parallel with each other. Wastewater is fed to predigester 10 through inlet 50 from waste water holding tank 50a.

The volume of the predigester 10 is turned over one to two times per day by a variable speed centrifugal pump 25a. A suction line 101 draws accumulated suspended solids from the bottom of the tank through a large diameter pipe. The predigester 10 has a sloping bottom 10a to facilitate collection of liquid and avoid stagnant areas. The effluent recirculation line 25 from pump 25a returns the flow to the top of the predigester tank 10. The recirculation line 25 is combined with the return liquid flow 28 from the second stage downflow anaerobic bioreactor 11.

In the preferred embodiment of the two part downflow anaerobic digestion system 100, the sloping bottom 10a of the predigester 10 functions as a clarifier to remove accumulated suspended solids and especially calcium precipitates from the system 100. Depending on the concentration of calcium in the feed stream 50, and the rate of accumulation of calcium carbonate precipitates in the system, the recirculation pump 25a may be shut off for up to three hours periodically to allow settling of suspended solids and precipitates. The predigester tank bottom 10a includes a manual or automatic outlet valve connected to a solids handling pump 20 such as a MOYNO™ pump or equivalent. After settling, and before restarting the circulation pump 25a, the solids release valve is opened and accumulated settled solids are removed using the solids handling pump 20. The removed solids may be disposed of as solid waste or used as organic fertilizer.

The pH of the recirculation/feed stream 25b can be adjusted by injecting a buffering agent such as caustic soda into the recirculation line 25. During steady-state operation of a mature bioreactor 11, the pH is typically maintained between 6.0 and 7.0. The actual pH set point may vary, depending on the cost of caustic soda versus the desired performance outcomes, including COD reduction and biogas production.

Nutrients may also be injected as required into the recirculation line 25 in order to optimize biogas production and COD reduction. In addition to the principal macronutrients, primarily urea and/or ammonium phosphate, and depending on the composition of the wastewater feed, it may be necessary to include micronutrients. The micronutrients are normally anaerobic digestionded in the form of dissolved Zinc Chloride (ZnCl₂), Molybdenum Chloride (MoCl₂), Cobalt Chloride (CoCl₂), Manganese Chloride (MnCl₂), Potassium Chloride (KCl), Magnesium Chloride (MgCl₂) and others. The amount of macronutrients and micronutrients to be added is based upon the chemical composition of the wastewater feed stream and the performance of the bioreactor in terms of COD reduction and biogas production rate.

The level of liquid in the predigester 10 may be controlled in order to alter the ratio of the predigester 10 to downflow anaerobic bioreactor 11 working volumes. The volume ratio may thus be optimized to improve system 100 performance. Furthermore, the predigester 10 may be designed with excess capacity so that future additional treatment capacity may be created by constructing additional further downflow anaerobic bioreactor modules as needed. The working volume of the predigester 10 may then be increased by changing the level set point as needed to service more downflow anaerobic bioreactor modules as they are brought on-line as treatment requirements increase over time.

An alternative embodiment of the system incorporates a continuous flow gravity decanter in-line between the predigester and the downflow anaerobic bioreactor. The supernatant from the decanter is the feed to the downflow anaerobic bioreactor, while the bottom-effluent line from the decanter, enriched for suspended solids such as calcium precipitates, is disposed of in an alternative manner to protect the downflow anaerobic bioreactor from calcium precipitates and thus increase the life of the ordered plastic media 111.

The remaining liquid effluent from the predigester 10 is transferred via conduit 26 to the inlet distribution manifold (not shown) on the top 11a of the downflow anaerobic bioreactor 11 by a centrifugal transfer pump 26a. This feed is combined with the liquid from the internal circulation lines 27 of the downflow anaerobic bioreactor 11.

### The downflow anaerobic bioreactor 11:

The core 11c of the downflow anaerobic bioreactor 11 has a plurality of ordered plastic media 111 submerged in the liquid bulk of the tank with vertical channels. The media are stacked in the center of the downflow anaerobic bioreactor and a support system is included in the design which supports the media stack at the desired height with minimal interruption of flow. There are liquid void spaces 11b and 11d of approximately 1 m depth both above and below the media stack 111. The plastic media 111 mounted in the center 11c of the liquid volume of the downflow anaerobic bioreactor 11 occupies 75% of the total liquid volume. The plastic and supports displace no more than 5% of the volume of the media bed, the lumina of the flow channels occupies 95% of the total bed volume.

As the recirculating effluent flows through the media channels, it serves as feed for both suspended and attached microbes which consume organic acids and other nutrients and produce a methane rich biogas. As the downflow anaerobic bioreactor 11 matures with time, the attached biomass grows a thick layer upon the walls of the plastic media 111. The layer consists of extracellular matrix of proteins, carbohydrates and other organic polymers secreted by the anaerobic bacteria, as well as calcium precipitates and other inorganic solids which may be trapped in the growing biofilm. The mature biofilm helps protect the anaerobic microbes, especially the methanogens, so that they better survive starvation periods or other shocks, for example during extended shutdowns of operations. The downflow anaerobic bioreactor 11 is capable of rapid restart after extended shutdown due to the robust reservoir of anaerobic biomass. This is unlike other anaerobic systems which hold their bacterial biomass in liquid suspension. In addition, the attached film retains the biomass inside the bioreactor without the need for a downstream decanter to recover microbial solids for return to the bioreactor. This is a significant advantage compared to anaerobic digestion systems using suspended cultures of bacteria, such as the upflow sludge blanket or the continuously stirred tank reactor.

The liquid feed/effluent flows through the vertical channels created in the packed bed of plastic media 111. In order to optimize the rate of destruction of organic waste components and production of biogas, the channel sizes of the plastic media matrix or packed bed were optimized to (i) maximize contact between the liquid in the lumen and the attached biomass matrix, (ii) minimize restriction of liquid flow, (iii) minimize the risk of blocking the channels due to the accumulation of solids and precipitates, (iv) provide enough structural support so that the media stack does not collapse under its own weight with the accumulation of biosolids.

The vertical channels permit easy escape of the biogas bubbles produced by the microbial metabolism. Methane is insoluble in water so collects in the gas head space 10b of the downflow anaerobic bioreactor 11. The liberated gas accumulates in the head spaces 10b and 10b of both the predigester 10 and the downflow anaerobic bioreactor 11. The head spaces are connected together with gas pipes 40, 40a and 40b to ensure constant equal gas pressure and mixing of biogas 41 between the predigester 10 and downflow anaerobic bioreactor 11. The composition of gas produced in the predigester 10 is different from that produced in the downflow anaerobic bioreactor 11, therefore by allowing the gases to mix, a more uniform gas composition is assured. The gas produced in the predigester 10 is depleted in methane compared to the gas from the downflow anaerobic bioreactor 11; however it is enriched for CO₂ and H₂. This is because the majority of the methane formers are found in the downflow anaerobic bioreactor 11 while the majority of the acidogenic bacteria occur in the predigester 10.

The constant flow of gas bubbles scours the surface of the fixed film, helping maintain open flow channels. In addition, the bubbles also help mix the effluent/liquid to facilitate mass transport of nutrients between the bulk media and the channel walls where the microbial biomass is attached. Mixing guarantees that liquid phase mass transport will not be rate limiting for the microbial metabolism which is essential in order to assure the maximum rate of destruction of organic waste during the residence time of the liquid inside the downflow anaerobic bioreactor. Because the flow channels are vertical, the scouring effect of the gas bubbles is not excessive, consequently the bulk microbial biomass is not stripped from the surface of the plastic media.

The downflow anaerobic bioreactor 11 incorporates a network of piping with down-pointing nozzles 27c suspended in the liquid void space 11d underneath the plastic media stack. The pipes are connected to two uptake manifolds (not shown) which carry off fluid to one of the two recirculation lines 27 positioned on each side of the tank via pump 27a. Recirculation flow is drawn from the bottom of the tank 11d and returned to the feed distribution manifold 27b on the tank roof, where it is mixed with the incoming feed 11a from the predigester 10 for reinjection at the top of the packed bed through the diffuser heads 27d.

The recirculation rate is typically ten times the rate of feed of fresh feed from the predigester. The high recirculation rate returns carbonates to the top of the downflow anaerobic bioreactor 11 while increasing the apparent average residence time of the liquid inside the downflow anaerobic bioreactor. The acid feed 11a from the predigester 10 is neutralized with minimal or no additional injection of caustic soda due to the high buffering capacity of the carbonates. This represents a significant savings in operating costs. However, in order to minimize operating costs even more the recirculation flow 27 may be moderated, depending upon the COD concentration of the feed to the downflow anaerobic bioreactor 11 as well as its performance and pH stability. At a minimum, the volume of the downflow anaerobic bioreactor should be recirculated at least twice in a 24 hour period.

In a particular embodiment of the invention the downflow anaerobic bioreactor 11 is practically self-buffering when fed with rum distillery vinasse, which has a very high inherent alkalinity. Feed streams with lower concentrations of natural alkalinity may require more frequent pH adjustment. In any case, the recirculation lines 27 of the downflow anaerobic bioreactor 11 include the capability of injecting caustic soda in order to prevent pH excursions. The system is automatically controlled by a pH control system and the desired operating pH range is between 7.5 and 8.0. This is close to the pH optimum of the methanogenic bacteria in the system.

The feed to the downflow anaerobic bioreactor 11 is distributed through a network of submerged diffuser heads 27d in the liquid head space above the packed bed of plastic media 111. The diffusers are spaced symmetrically around the top of the tank so that all areas of the liquid flow receive the same flow, assuring homogeneous distribution of feed throughout the packed bed 111. The number of diffusers depends on the total volumetric flow of the feed (fresh feed from predigester plus recirculation from bottom of downflow anaerobic bioreactor) and the cross sectional area of the downflow anaerobic bioreactor 11. The flow through the diffuser pipes must be in the laminar flow regime. In the preferred embodiment of the invention the diffuser pipes have an internal diameter of approximately 10.2 cm (4 inches).

### Return circulation to the predigester 10 from the downflow anaerobic bioreactor 11:

In addition to the internal recirculation of liquid from the uptake manifolds to the top of the downflow anaerobic bioreactor 11, there is an additional return circulation of treated effluent 28 from the downflow anaerobic bioreactor 11 back to the first stage predigester 10. The downflow anaerobic bioreactor effluent is split so that the bulk of the flow goes to discharge or subsequent downstream processing as needed, while a fraction of the flow is diverted back to the feed line to the first stage predigester 10.

By returning part of the carbonate rich effluent (slightly alkaline pH) back to the feed of the predigester 10, the initial acidity of the feed to the predigester 10 is partially neutralized, significantly reducing the requirement for caustic soda in the pH control system on the predigester 10. By returning part of the effluent back to the feed of the predigester 10, the performance of the overall system is significantly enhanced while reducing the requirement for expensive chemicals to operate the predigester 10. This results in significant operating cost savings for the system 100.

The return circulation rate of downflow anaerobic bioreactor effluent to the predigester 10 is controlled by a variable speed pump 28a. The maximum flow rate is approximately one third the volumetric feed rate of fresh wastewater to the predigester 10. The flow rate is variable and accordingly can be set to a lower value to economize on operating costs, depending on the performance of the system and the amount of buffering agent consumed for pH control. In addition to buffering the predigester 10, the constant return circulation helps to maintain a healthy population of anaerobic biomass in the predigester 10 without the addition of a downstream sludge harvesting system.

The predigester 10 is operated at acid pH, between 6 and 7, to maximize the efficiency of the hydrolysis and acidification of organic wastes in the feed without incurring excessive costs for caustic soda. The downflow anaerobic bioreactor 11 is operated close to pH 7.5, and pH excursions above 8 or below 7.0 should be avoided to prevent control problems and possible reduction in methane production.

The predigester 10 and downflow anaerobic bioreactor 11 operate at the same mesophilic temperature, with a temperature set point of approximately 40°C. The temperature of the system should not be allowed to drift outside the temperature range of 38 to 42°C in order to avoid inducing shocks to the microbial biomass which could lead to temporary reductions in efficiency and biogas production.

In an alternative embodiment of the invention, the temperature of operation may be slowly increased to 53-55°C +/- 2°C in order to increase the metabolic rate of the microbes and enhance the rate of destruction of organic matter. However, the robustness and stability of operation of the system at mesophilic termperatures may be reduced when the option of thermophilic operation is implemented.

In the example of the invention where the two stage anaerobic digestion system 100 is used to treat wastewater generated by the distillery industry known as vinasse, the system 100 removes approximately 70-80% of the total soluble COD in the influent vinasse. The effluent from the downflow anaerobic bioreactor 11 still contains inorganic compounds, and especially plant nutrient minerals such as potassium and phosphorus, which were present in the initial feed wastewater. In addition, the effluent contains significant concentrations of nitrogen and reduced sulphur compounds. The suspended solids concentration typically increases slightly due to the presence of anaerobic microbes in the effluent, shed from the downflow anaerobic bioreactor 11. These suspended solids may be used for to form a fertiliser.

It will of course be understood that the invention is not limited to the specific details described herein, which are given by way of example only, and that various modifications and alterations are possible within the scope of the invention as defined in the appended claims.

## Claims

1. An apparatus (100) for the treatment of fluid containing oxygen demanding organic material with microorganisms comprising:
a two stage downflow anaerobic digester (100) comprising a predigester (10) and at least one anaerobic bioreactor (11) connected in series with the predigester (10), wherein each of the predigester (10) and the at least one anaerobic bioreactor (11) comprise a substantially fluid tight vessel,
the predigester (10) having at least one predigester inlet (50) and at least one predigester outlet (26) whereby the inlet (50) and the outlet (26) are arranged so that the fluid enters the two stage anaerobic digester (100) at the at least one predigester inlet (50) and flows in a downward direction through the predigester (10) from the at least one predigester inlet (50) to the at least one predigester outlet (26);
the anaerobic bioreactor (11) having at least one anaerobic bioreactor inlet (11 a), at least one anaerobic bioreactor outlet (28) and a plurality of high surface area porous media (111) suitable for growth of microorganisms intermediate the inlet (11a) and the outlet (28) thereupon filling at least a portion (11c) of the anaerobic bioreactor (11), whereby the inlet (11 a) and outlet (28) are arranged so that the fluid enters the anaerobic bioreactor (11) at the at least one anaerobic bioreactor inlet (11a) and flows in a downward direction through the anaerobic bioreactor (11) and thereby engages with the microorganisms on the media (111);
wherein at least one predigester outlet (26) is connected to at least one anaerobic bioreactor inlet (11 a); and
wherein each of the predigester (10) and anaerobic bioreactor (11) further comprise at least one recirculation device (25, 25a, 27, 27a) withdrawing fluid from a lower portion of each of the predigester (10) and anaerobic bioreactor (11d) and returning the withdrawn fluid to an upper portion of each of the predigester (10) and anaerobic bioreactor respectively (11 b);
wherein the downflow anaerobic digester (100) further comprises at least one return circulation feed (25b) between at least one anaerobic bioreactor outlet (28) and at least one predigester inlet (50); and
the fluid exits the two stage anaerobic digester (100) at the at least one anaerobic bioreactor outlet (28, 20),
wherein the headspaces of the predigester (10) and the downflow anaerobic bioreactor (11) are linked by a conduit to ensure equal gas pressure between the headspaces of the predigester (10) and the downflow anaerobic bioreactor (11), and
wherein the plurality of high surface area porous media (111) are ordered plastic media which are stacked in the centre (11c) of the downflow anaerobic bioreactor (11) such that, in use, they are submerged in the liquid bulk of the bioreactor with vertical channels, and wherein there are liquid void spaces (11b, 11d) of approximately 1 m depth both above and below the media stack (111).

2. An apparatus as claimed in Claim 1, wherein the two stage anaerobic digester comprises a continuously mixed predigester (10) and at least one downflow anaerobic bioreactor (11).

3. An apparatus as claimed in Claim 1 or Claim 2, wherein the high surface area porous media (111) are suitable for growth of methanogenic and acetogenic anaerobic bacteria.

4. An apparatus as claimed in any one of Claims 1 to 3, wherein the predigester (10) supports growth of a completely mixed suspended culture of facultative bacterial organisms that carry out acidogenic functions.

5. An apparatus as claimed in any one of the preceding claims, wherein the at least one predigester outlet (26) is connected to at least one anaerobic bioreactor inlet (11 a) by a conduit.

6. An apparatus as claimed in any one of the preceding claims, wherein the bottom of the predigester (10a) comprises a clarifier to remove excess suspended solids, preferably wherein a separate outlet line (101) is provided for periodically removing solids from the bottom of the predigester, or wherein the two stage downflow anaerobic digester (100) further comprises a continuous flow gravity decanter between the predigester (10) and the downflow anaerobic bioreactor (11).

7. A method for reducing the level of oxygen demanding material in a fluid stream using a two stage anaerobic digester (100) comprising a predigester (10) and an anaerobic bioreactor (11) having a plurality of high surface area porous media (111) suitable for growth of microorganisms, wherein the headspaces of the predigester (10) and the downflow anaerobic bioreactor (11) are linked by a conduit to ensure equal gas pressure between the headspaces of the predigester (10) and the downflow anaerobic bioreactor (11) and wherein the plurality of high surface area porous media (111) are ordered plastic media which are stacked in the centre (11c) of the downflow anaerobic bioreactor (11) such that, in use, they are submerged in the liquid bulk of the bioreactor with vertical channels, and wherein there are liquid void spaces (11b, 11d) of approximately 1 m depth both above and below the media stack (111), the steps of the method comprising the steps of:
(a) introducing an influent fluid stream to the two stage anaerobic digester (100) to an inlet (50) on the predigester (10);
(b) flowing said fluid downwardly through the predigester (10) to an outlet (25, 26) on the predigester (10);
(c) flowing a portion of the fluid from the outlet of the predigester (26) into an inlet (11 a) on the anaerobic bioreactor (11), recirculating a further portion of the said fluid from a lower portion of the predigester (10) to an upper portion of the predigester (10) and withdrawing a further portion of the fluid as an effluent stream from the outlet (101) on the predigester (10);
(d) flowing the fluid from the inlet (11a) on the anaerobic bioreactor (11) downwardly through the anaerobic bioreactor (11) to an outlet (27, 28) on the anaerobic bioreactor (11) such that the fluid passes through the media (111) and engages with the microorganisms so as to reduce the level of oxygen demanding material in the fluid relative to the level of oxygen demanding material in the influent fluid stream;
(e) recirculating a portion of the fluid from a lower portion of the anaerobic bioreactor (11d) to an upper portion of the anaerobic bioreactor (11 b);
(f) recirculating a further portion of the fluid from the lower portion of the anaerobic bioreactor (11 d) to the upper portion of the predigester (10); and
(g) withdrawing the remaining fluid as an effluent stream from the outlet (28) on the anaerobic bioreactor (11),
preferably wherein nutrients can be added to the fluid intermediate the predigester (10) and anaerobic digester (11) stages,
preferably wherein the nutrients comprise one or more selected from the macronutrients group comprising urea and/or ammonium phosphate and/or one or more selected from the micronutrients group comprising in the form of dissolved Zinc Chloride (ZnCl₂), Molybdenum Chloride (MoCl₂), Cobalt Chloride (CoCl₂), Manganese Chloride (MnCl₂), Potassium Chloride (KCl), Magnesium Chloride (MgCl₂) and others,
preferably wherein a buffering agent can be added to the fluid intermediate the predigester (10) and anaerobic digester (11) stages.

8. The method for reducing the level of oxygen demanding material in a fluid stream as claimed in Claim 7, wherein the predigester is operated under anaerobic conditions in a pH range of between 6.0 and 7.0, the anaerobic bioreactor (11) is operated under anaerobic conditions in a pH range of between 7.0 and 8.0 and wherein the pH difference between the predigester (10) and the anaerobic bioreactor (11) is approximately 0.5 to 1 pH units.

9. The method as claimed in Claim 7 or Claim 8, wherein the predigester (10) is operated under anaerobic conditions at a pH level of approximately 6.5.

10. The method as claimed as claimed in any one of Claims 7 to 9, wherein the anaerobic bioreactor (11) is operated under anaerobic conditions at a pH level of approximately 7.5.

11. The method as claimed in any one of Claims 7 to 10, wherein an at least one recirculation device (25, 25a) in the predigester (10) is operated at a recirculation rate of between three and ten times the volumetric flow rate of the at least one predigester inlet (50) and more preferably at approximately three times the volumetric flow rate of the at least one predigester inlet (50).

12. The method as claimed in any one of Claims 7 to 11, wherein an at least one recirculation device (27, 27a) in the anaerobic bioreactor (11) is operated at a recirculation rate of between three and ten times the volumetric flow rate of the at least one anaerobic bioreactor inlet (11 a) and more preferably at approximately three times the volumetric flow rate of the at least one anaerobic bioreactor inlet (11 a).

13. The method as claimed in any one of Claims 7 to 12, wherein a return circulation feed (25b) between at least one anaerobic bioreactor outlet (28) and at least one predigester inlet (50) operates at a recirculation rate within the range of zero to one-third of the fluid flow rate into the two stage anaerobic digester (100).

14. The method as claimed in any one of the Claims 7 to 13, wherein the predigester (10) and the downflow anaerobic bioreactor (11) are operated at the same temperature.

15. The method as claimed in any one of Claims 7 to 14, wherein the predigester (10) and the downflow anaerobic bioreactor (11) are operated at temperatures suitable for either mesophilic or thermophilic bacteria,
preferably wherein the predigester (10) and the downflow anaerobic bioreactor (11) are operated at temperatures within the range of 38°C to 40°C +/- 2°C or within the range of 50°C to 55°C +/- 2°C.

## Patentansprüche

1. Vorrichtung (100) zur Behandlung von Fluid, das sauerstoffbenötigendes organisches Material mit Mikroorganismen enthält, umfassend:
einen zweistufigen nachgeschalteten Biogas-Fermenter (100) umfassend einen Vorfermenter (10) und mindestens einen Biogasreaktor (11), der mit dem Vorfermenter (10) in Reihe geschaltet ist, wobei jeder des Vorfermenter (10) und des mindestens einen Biogasreaktors (11) einen im Wesentlichen fluiddichten Kessel umfasst,
den Vorfermenter (10) mit mindestens einem Vorfermentereinlass (50) und mindestens einem Vorfermenterauslass (26), wobei der Einlass (50) und der Auslass (26) so angeordnet sind, sodass das Fluid an dem mindestens einen Vorfermentereinlass (50) in den zweistufigen Biogas-Fermenter (100) eintritt und in einer Abwärtsrichtung von dem mindestens einen Vorfermentereinlass (50) zu dem mindestens einen Vorfermenterauslass (26) durch den Vorfermenter (10) strömt;
den Biogasreaktor (11) mit mindestens einem Biogasreaktoreinlass (11a), mindestens eine Biogasreaktorauslass (28) und einer Vielzahl von Medien mit hochporöser Oberfläche (111) geeignet für ein Wachstum von Mikroorganismen zwischen dem Einlass (11a) und dem Auslass (28), daraufhin füllend mindestens einen Abschnitt (11c) des Biogasreaktors (11), wobei der Einlass (11a) und Auslass (28) so angeordnet sind, dass das Fluid an dem mindestens einen Biogasreaktoreinlass (11a) in den Biogasreaktor (11) eintritt und in einer Abwärtsrichtung durch den Biogasreaktor (11) strömt und dadurch mit den Mikroorganismen an den Medien (111) in Kontakt gelangt;
wobei mindestens ein Vorfermenterauslass (26) mit mindestens einem Biogasreaktoreinlass (11a) verbunden ist; und
wobei jeder des Vorfermenters (10) und Biogasreaktors (11) ferner mindestens eine Umwälzvorrichtung (25, 25a, 27, 27a) umfasst, die Fluid von einem unteren Abschnitt von jedem des Vorfermenters (10) und Biogasreaktors (11d) entnimmt und das entnommene Fluid zu einem oberen Abschnitt von jedem des Vorfermenters (10) bzw. Biogasreaktors (11b) zurückführt;
wobei der nachgeschaltete Biogas-Fermenter (100) ferner mindestens eine Rücklaufspeisung (25b) zwischen mindestens einem Biogasreaktorauslass (28) und mindestens einem Vorfermentereinlass (50) umfasst; und
das Fluid at dem mindestens einen Biogasreaktorauslass (28, 20) aus dem zweistufigen Biogas-Fermenter (100) austritt,
wobei die Gasräume des Vorfermenters (10) und des nachgeschalteten Biogasreaktors (11) durch einen Kanal verbunden sind, um einen gleichen Gasdruck zwischen den Gasräumen des Vorfermenters (10) und des nachgeschalteten Biogasreaktors (11) sicherzustellen, und
wobei die Vielzahl von Medien mit hochporöser Oberfläche (111) geordnete plastische Medien sind, die in der Mitte (11c) des nachgeschalteten Biogasreaktors (11) so gestapelt sind, dass in der Verwendung in die flüssige Masse des Bioreaktors mit vertikalen Kanälen untergetaucht sind, und wobei es Flüssigkeitshohlräume (11b, 11d) mit einer Tiefe von ungefähr 1 m über und unter dem Medienstapel (111) gibt.

2. Vorrichtung nach Anspruch 1, wobei der zweistufige Biogas-Fermenter einen kontinuierlich gemischten Vorfermenter (10) und mindestens einen nachgeschalteten Biogasreaktor (11) umfasst.

3. Vorrichtung nach Anspruch 1 oder Claim 2, wobei die Medien mit hochporöser Oberfläche (111) für das Wachstum methanogener und acetogener anaerober Bakterien geeignet sind.

4. Vorrichtung nach einem der Ansprüche 1 bis 3, wobei der Vorfermenter (10) ein Wachstum einer vollständig gemischten suspendierten Kultur von fakultativen bakteriellen Organismen unterstützt, die säurebildende Funktionen ausführen.

5. Vorrichtung nach einem der vorherigen Ansprüche, wobei der mindestens eine Vorfermenterauslass (26) mit mindestens einem Biogasreaktoreinlass (11a) durch einen Kanal verbunden ist.

6. Vorrichtung nach einem der vorherigen Ansprüche, wobei der Boden des Vorfermenters (10a) ein Absetzbecken umfasst, um übermäßige suspendierte Feststoffe zu entfernen, wobei vorzugsweise eine separate Auslassleitung (101) zum regelmäßigen Entfernen von Feststoffen vom Boden des Vorfermenters bereitgestellt ist, oder wobei der zweistufige nachgeschaltete Biogas-Fermenter (100) ferner einen Durchlauf-Gravitätsdekanter zwischen dem Vorfermenter (10) und dem nachgeschalteten Biogasreaktor (11) umfasst.

7. Verfahren zum Reduzieren des Gehalts an sauerstoffbenötigendem Material in einem Fluidstrom unter Verwendung eines zweistufigen Biogas-Fermenters (100) umfassend einen Vorfermenter (10) und einen Biogasreaktor (11) mit einer Vielzahl von Medien mit hochporöser Oberfläche (111) geeignet für ein Wachstum von Mikroorganismen, wobei die Gasräume des Vorfermenters (10) und des nachgeschalteten Biogasreaktors (11) durch einen Kanal verbunden sind, um einen gleichen Gasdruck zwischen den Gasräume des Vorfermenters (10) und des nachgeschalteten Biogasreaktors (11) sicherzustellen, und wobei die Vielzahl von Medien mit hochporöser Oberfläche (111) geordnete plastische Medien sind, die in der Mitte (11c) des nachgeschalteten Biogasreaktors (11) so gestapelt sind, dass in der Verwendung in die flüssige Masse des Bioreaktors mit vertikalen Kanälen untergetaucht sind, und wobei es Flüssigkeitshohlräume (11b, 11d) mit einer Tiefe von ungefähr 1 m über und unter dem Medienstapel (111) gibt, die Schritte des Verfahrens umfassend die folgenden Schritte:
(a) Einleiten eines Zulauf-Fluidstroms zum zweistufigen Biogas-Fermenter (100) zu einem Einlass (50) am Vorfermenter (10);
(b) Fließen des Fluids in Abwärtsrichtung durch den Vorfermenter (10) zu einem Auslass (25, 26) am Vorfermenter (10);
(c) Fließen eines Teils des Fluids vom Auslass des Vorfermenters (26) in einen Einlass (11a) am Biogasreaktor (11), Umwälzen eines weiteren Teils des Fluids von einem unteren Abschnitt des Vorfermenters (10) zu einem oberen Abschnitt des Vorfermenters (10) und Entnehmen eines weiteren Teils des Fluids als ein Auslaufstrom vom Auslass (101) am Vorfermenter (10);
(d) Fließen des Fluids vom Einlass (11a) am Biogasreaktor (11) in Abwärtsrichtung durch den Biogasreaktor (11) zu einem Auslass (27, 28) am Biogasreaktor (11), sodass das Fluid durch die Medien (111) strömt und mit den Mikroorganismen in Kontakt gelangt, um den Gehalt an sauerstoffbenötigendem Material im Fluid in Bezug auf den Gehalt an sauerstoffbenötigendem Material im Zulauf-Fluidstrom zu reduzieren;
(e) Umwälzen eines Teils des Fluids von einem unteren Abschnitt des Biogasreaktors (11 d) zu einem oberen Abschnitt des Biogasreaktors (11b);
(f) Umwälzen eines Teils des Fluids von einem unteren Abschnitt des Biogasreaktors (11 d) zu dem oberen Abschnitt des Vorfermenters (10); und
(g) Entnehmen des verbleibenden Fluids als einen Auslaufstrom vom Auslass (28) am Biogasreaktor (11),
wobei vorzugsweise dem Fluid zwischen den Vorfermenter-(10) und Biogas-Fermenter-(11) Stufen Nährstoffe hinzugefügt werden können,
wobei vorzugsweise die Nährstoffe einen oder mehrere umfassen ausgewählt von der Makronährstoff-Gruppe umfassend Harnstoff und/oder Ammoniumphosphat und/oder einen oder mehrere ausgewählt aus der Mikronährstoff-Gruppe umfassend in gelöster Form Zinkchlorid (ZnCl₂), Molybdänchlorid (MoCl₂), Kobaltchlorid (CoCl₂), Manganchlorid (MnCl₂), Kaliumchlorid (KCl), Magnesiumchlorid (MgCl₂) und andere,
wobei vorzugsweise dem Fluid zwischen den Vorfermenter- (10) und Biogas-Fermenter-(11) Stufen ein Puffermittel hinzugefügt werden kann.

8. Verfahren zum Reduzieren des Gehalts an sauerstoffbenötigendem Material in einem Fluidstrom nach Anspruch 7, wobei der Vorfermenter unter anaeroben Bedingungen in einem pH-Bereich zwischen 6,0 und 7,0 betrieben wird, der Biogasreaktor (11) unter anaeroben Bedingungen in einem pH-Bereich zwischen 7,0 und 8,0 betrieben wird, und wobei der pH-Unterschied zwischen dem Vorfermenter (10) und dem Biogasreaktor (11) ungefähr 0,5 bis 1 pH-Einheiten beträgt.

9. Verfahren nach Anspruch 7 oder Anspruch 8, wobei der Vorfermenter (10) unter anaeroben Bedingungen mit einem pH-Wert von ungefähr 6,5 betrieben wird.

10. Verfahren nach einem der Ansprüche 7 bis 9, wobei der Biogasreaktor (11) unter anaeroben Bedingungen mit einem pH-Wert von ungefähr 7,5 betrieben wird.

11. Verfahren nach einem der Ansprüche 7 bis 10, wobei eine mindestens eine Umwälzvorrichtung (25, 25a) im Vorfermenter (10) mit einer Umwälzrate von zwischen dem drei- und zehnfachen der Volumenstromrate des mindestens einen Vorfermentereinlasses (50) und noch vorzugsweiser mit dem dreifachen der Volumenstromrate des mindestens einen Vorfermentereinlasses (50) betrieben wird.

12. Verfahren nach einem der Ansprüche 7 bis 11, wobei eine mindestens eine Umwälzvorrichtung (27, 27a) im Biogasreaktor (11) mit einer Umwälzrate von zwischen dem drei- und zehnfachen der Volumenstromrate des mindestens einen Biogasreaktoreinlasses (11a) und noch vorzugsweiser mit dem dreifachen der Volumenstromrate des mindestens einen Biogasreaktoreinlasses (11a) betrieben wird.

13. Verfahren nach einem der Ansprüche 7 bis 12, wobei eine Rücklaufspeisung (25b) zwischen mindestens einem Biogasreaktorauslass (28) und mindestens einem Vorfermentereinlass (50) mit einer Umwälzrate im Bereich von null bis einem Drittel der Fluidstromrate in den zweistufigen Biogas-Fermenter (100) betrieben wird.

14. Verfahren nach einem der Ansprüche 7 bis 13, wobei der Vorfermenter (10) und der nachgeschaltete Biogasreaktor (11) bei derselben Temperatur betrieben werden.

15. Verfahren nach einem der Ansprüche 7 bis 14, wobei der Vorfermenter (10) und der nachgeschaltete Biogasreaktor (11) bei Temperaturen betrieben werden, die für mesophile oder thermophile Bakterien geeignet sind,
vorzugsweise wobei der Vorfermenter (10) und der nachgeschaltete Biogasreaktor (11) bei Temperaturen im Bereich von 38 °C bis 40 °C +/- 2 °C oder im Bereich von 50 °C bis 55 °C +/- 2 °C betrieben werden.

## Revendications

1. Appareil (100) pour le traitement d'un fluide contenant une matière organique demandant de l'oxygène au moyen de micro-organismes, comprenant :
un digesteur anaérobie à courant descendant à deux étages (100) comprenant un prédigesteur (10) et au moins un bioréacteur anaérobie (11) raccordé en série avec le prédigesteur (10), dans lequel chacun du prédigesteur (10) et de l'au moins un bioréacteur anaérobie (11) comprend une cuve sensiblement étanche aux fluides,
le prédigesteur (10) comportant au moins une entrée (50) de prédigesteur et au moins une sortie (26) de prédigesteur, ce par quoi l'entrée (50) et la sortie (26) sont conçues de sorte que le fluide pénètre le digesteur anaérobie à deux étages (100) au niveau de l'au moins une entrée (50) de prédigesteur et s'écoule dans un sens vers le bas à travers le prédigesteur (10) de l'au moins une entrée (50) de prédigesteur vers l'au moins une sortie (26) de prédigesteur ;
le bioréacteur anaérobie (11) comportant au moins une entrée (11a) de bioréacteur anaérobie, au moins une sortie (28) de bioréacteur anaérobie et plusieurs supports poreux de grande superficie (111) appropriés pour supporter un développement de micro-organismes entre l'entrée (11a) et la sortie (28) lors du remplissage d'au moins une partie (11c) du bioréacteur anaérobie (11), ce par quoi l'entrée (11a) et la sortie (28) sont conçues de sorte que le fluide pénètre le bioréacteur anaérobie (11) au niveau de l'au moins une entrée (11a) de bioréacteur anaérobie et s'écoule dans un sens vers le bas à travers le bioréacteur anaérobie (11) et rencontre ainsi les micro-organismes se trouvant sur les supports (111) ;
dans lequel au moins une sortie (26) de prédigesteur est raccordée à au moins une entrée (11a) de bioréacteur anaérobie ; et
dans lequel chacun du prédigesteur (10) et du bioréacteur anaérobie (11) comprend en outre au moins un dispositif de recirculation (25, 25a, 27, 27a) soutirant du fluide d'une partie inférieure de chacun du prédigesteur (10) et d'un bioréacteur anaérobie (11d) et renvoyant le fluide soutiré respectivement vers une partie supérieure de chacun du prédigesteur (10) et d'un bioréacteur anaérobie (11b) ;
dans lequel le digesteur anaérobie à écoulement descendant (100) comprend en outre au moins une alimentation de circulation de renvoi (25b) entre au moins une sortie (28) de bioréacteur anaérobie et au moins une entrée (50) de prédigesteur ; et
le fluide quitte le digesteur anaérobie à deux étages (100) au niveau de l'au moins une sortie (28, 20) de bioréacteur anaérobie,
dans lequel les espaces libres du prédigesteur (10) et du bioréacteur anaérobie à écoulement descendant (11) communiquent par un conduit de façon à garantir une pression de gaz égale entre les espaces libres du prédigesteur (10) et du bioréacteur anaérobie à écoulement descendant (11), et
dans lequel les plusieurs supports poreux de grande superficie (111) sont des supports en plastique commandés qui sont empilés au centre (11c) du bioréacteur anaérobie à écoulement descendant (11) de sorte que, lors de l'utilisation, il se trouvent immergés dans le vrac liquide du bioréacteur à canaux verticaux, et dans lequel on trouve des espaces exempts de liquide (11b, 11d) de sensiblement 1 m de profondeur à la fois au-dessus et au-dessous de la pile de supports (111).

2. Appareil selon la revendication 1, dans lequel le digesteur anaérobie à deux étages comprend un prédigesteur (10) à mélange continu et au moins un bioréacteur anaérobie à écoulement descendant (11).

3. Appareil selon la revendication 1 ou la revendication 2, dans lequel les supports poreux de grande superficie (111) sont appropriés pour un développement de bactéries anaérobies méthanogènes et acétogènes.

4. Appareil selon l'une quelconque des revendications 1 à 3, dans lequel le prédigesteur (10) supporte une croissance d'une culture suspendue complètement mélangée d'organismes bactériens facultatifs qui assurent des fonctions acidogènes.

5. Appareil selon l'une quelconque des revendications précédentes, dans lequel l'au moins une sortie (26) de prédigesteur est raccordée à au moins une entrée (11a) de bioréacteur anaérobie par un conduit.

6. Appareil selon l'une quelconque des revendications précédentes, dans lequel la partie inférieure du prédigesteur (10a) comprend un clarificateur servant à éliminer un excès de particules solides en suspension, de préférence dans lequel une conduite (101) de sortie distincte est prévue pour éliminer périodiquement les particules solides de la partie inférieure du prédigesteur, ou dans lequel le digesteur anaérobie à écoulement descendant à deux étages (100) comprend en outre un décanteur à gravité à écoulement continu entre le prédigesteur (10) et le bioréacteur anaérobie à écoulement descendant (11).

7. Procédé de diminution du niveau d'une matière demandant de l'oxygène dans un flux de fluide au moyen d'un digesteur anaérobie à deux étages (100) comprenant un prédigesteur (10) et un bioréacteur anaérobie (11) comportant plusieurs supports poreux de grande superficie (111) appropriés pour un développement de micro-organismes, dans lequel les espaces libres du prédigesteur (10) et du bioréacteur anaérobie à écoulement descendant (11) communiquent par un conduit de façon à garantir une pression de gaz égale entre les espaces libres du prédigesteur (10) et du bioréacteur anaérobie à écoulement descendant (11) et dans lequel les plusieurs supports poreux de grande superficie (111) sont des supports en plastique ordonnés qui sont empilés au centre (11c) du bioréacteur anaérobie à écoulement descendant (11) de sorte que, lors de l'utilisation, ils se trouvent immergés dans le vrac liquide du bioréacteur à canaux verticaux, et dans lequel on trouve des espaces exempts de liquide (11b, 11d) de sensiblement 1 m de profondeur à la fois au-dessus et au-dessous de la pile de supports (111), les étapes du procédé comprenant les étapes consistant à :
(a) introduire un flux de fluide d'influent amené vers le digesteur anaérobie à deux étages (100) dans une entrée (50) du prédigesteur (10) ;
(b) laisser s'écouler ledit fluide vers le bas à travers le prédigesteur (10) vers une sortie (25, 26) du prédigesteur (10) ;
(c) laisser s'écouler une partie du fluide de la sortie (26) du prédigesteur dans une entrée (11a) du bioréacteur anaérobie (11), remettre en circulation une partie supplémentaire dudit fluide d'une partie inférieure du prédigesteur (10) vers une partie supérieure du prédigesteur (10) et soutirer une autre partie du fluide en tant que flux d'effluent à partir de la sortie (101) du prédigesteur (10) ;
(d) laisser s'écouler le fluide de l'entrée (11a) du bioréacteur anaérobie (11) vers le bas à travers le bioréacteur anaérobie (11) vers une sortie (27, 28) du bioréacteur anaérobie (11), de sorte que le fluide traverse les supports (111) et rencontre les micro-organismes de façon à réduire le niveau de matière demandant de l'oxygène dans le fluide par rapport au niveau de matière demandant de l'oxygène dans le flux de fluide d'influent ;
(e) remettre en circulation une partie du fluide d'une partie inférieure du bioréacteur anaérobie (11d) vers une partie supérieure du bioréacteur anaérobie (11b) ;
(f) remettre en circulation une partie supplémentaire du fluide de la partie inférieure du bioréacteur anaérobie (11d) vers la partie supérieure du prédigesteur (10) ; et
(g) soutirer le fluide restant en tant que flux d'effluent de la sortie (28) du bioréacteur anaérobie (11),
de préférence dans lequel des nutriments peuvent être ajoutés au fluide entre le prédigesteur (10) et les étages (11) de digesteur anaérobie,
de préférence dans lequel les nutriments comprennent un ou plusieurs macronutriments sélectionnés dans le groupe de macronutriments comprenant de l'urée et/ou du phosphate d'ammonium et/ou un ou plusieurs micronutriments sélectionnés dans le groupe de micronutriments comprenant, sous forme dissoute, du chlorure de zinc (ZnCl₂), du chlorure de molybdène (MoCl₂), du chlorure de cobalt (CoCl₂), du chlorure de manganèse (MnCl₂), du chlorure de potassium (KCl), du chlorure de magnésium (MgCl₂), et autres,
de préférence dans lequel un tampon peut être ajouté au fluide entre le prédigesteur (10) et les étages (11) de digesteur anaérobie.

8. Procédé de diminution du niveau de matière demandant de l'oxygène dans un flux de fluide selon la revendication 7, dans lequel le prédigesteur est mis en oeuvre dans des conditions anaérobies dans une plage de pH comprise entre 6,0 et 7,0, le bioréacteur anaérobie (11) est mis en oeuvre dans des conditions anaérobies dans une plage de pH comprise entre 7,0 et 8,0 et dans lequel la différence de pH entre le prédigesteur (10) et le bioréacteur anaérobie (11) est de sensiblement 0,5 à 1 unité de pH.

9. Procédé selon la revendication 7 ou la revendication 8, dans lequel le prédigesteur (10) est mis en oeuvre dans des conditions anaérobies à un niveau de pH de sensiblement 6,5.

10. Procédé selon l'une quelconque des revendications 7 à 9, dans lequel le bioréacteur anaérobie (11) est mis en oeuvre dans des conditions anaérobies à un niveau de pH de sensiblement 7,5.

11. Procédé selon l'une quelconque des revendications 7 à 10, dans lequel au moins un dispositif de recirculation (25, 25a) dans le prédigesteur (10) est mis en oeuvre à une vitesse de recirculation comprise entre trois et dix fois le débit volumétrique de l'au moins une entrée (50) de prédigesteur et l'on préfère davantage de sensiblement trois fois le débit volumétrique de l'au moins une entrée (50) de prédigesteur.

12. Procédé selon l'une quelconque des revendications 7 à 11, dans lequel au moins un dispositif de recirculation (27, 27a) dans le bioréacteur anaérobie (11) est mis en oeuvre à une vitesse de recirculation comprise entre trois et dix fois le débit volumétrique de l'au moins une entrée (11a) de bioréacteur anaérobie et l'on préfère davantage de sensiblement trois fois le débit volumétrique de l'au moins une entrée (11a) de bioréacteur anaérobie.

13. Procédé selon l'une quelconque des revendications 7 à 12, dans lequel une alimentation de circulation de renvoi (25b) entre au moins une sortie (28) de bioréacteur anaérobie et au moins une entrée (50) de prédigesteur est mise en oeuvre à une vitesse de recirculation comprise dans la plage de zéro à un tiers du débit de fluide dans le digesteur anaérobie à deux étages (100).

14. Procédé selon l'une quelconque des revendications 7 à 13, dans lequel le prédigesteur (10) et le bioréacteur anaérobie à écoulement descendant (11) sont mis en oeuvre à la même température.

15. Procédé selon l'une quelconque des revendications 7 à 14, dans lequel le prédigesteur (10) et le bioréacteur anaérobie à écoulement descendant (11) sont mis en oeuvre à des températures appropriées pour des bactéries soit mésophiles soit thermophiles,
de préférence dans lequel le prédigesteur (10) et le bioréacteur anaérobie à écoulement descendant (11) sont mis en oeuvre à des températures comprises dans la plage de 38 °C à 40 °C +/- 2 °C ou comprises dans la plage de 50 °C à 55 °C +/- 2 °C.
